# EUROPEAN PATENT SPECIFICATION

(11) **EP 3 051 041 B1**
(45) Date of publication and mention of the grant of the patent: **16.10.2019**
(21) Application number: 16153073.8
(22) Date of filing: 28.01.2016
(51) Int. Cl.: E04H 6/34, B60S 13/02

(54) **MOVING ASSEMBLY FOR AN AUTOMATIC CAR PARK**
BEWEGLICHE ANORDNUNG FÜR EIN AUTOMATISCHES PARKHAUS
ENSEMBLE MOBILE POUR UN PARKING AUTOMATIQUE

(30) Priority: 30.01.2015 IT PD20150019
(43) Date of publication of application: 03.08.2016
(73) Proprietor: Ecospace S.r.l., 35043 Monselice (IT)
(72) Inventor: GALLO, Filippo, 35030 Torreglia (IT); SALVIATO, Tiziano, 30031 Dolo (IT)
(74) Representative: De Bortoli, Tiziano

(56) References cited:
- EP-A1- 0 501 935
- WO-A1-2009/030083
- CH-A5- 682 686
- US-A1- 2012 039 693
- US-A1- 2012 251 276

## Description

### FIELD OF THE INVENTION

The present invention relates to the field of designing and making automated car parks. In particular, the invention relates to a moving assembly to be used for moving a vehicle between at least one first storage or loading/unloading station of the car and at least one second storage or loading/unloading station of the car. The present invention also relates to an automated car park comprising at least one moving assembly according to the invention.

### PRIOR ART

It is known to make automated car parks for use, for example, in places in which space is limited, such as historical city centers and towns in general. Examples of automated car parks are disclosed in CH 682 686 and EP 0 501 935 A1. In such car parks, a car is placed on a supporting platform in a loading or pick-up position, which is then moved to a storage position provided for the car. The storage position may be either adjacent to, or far from the loading position. In this second case, other intermediate storage positions may or may not be present for other cars. So, according to the configuration of the car park, the supporting platform may cross one or more intermediate positions before reaching the assigned storage position. Such intermediate positions must be necessarily "free" to allow the transit of the platform.

The platform is normally moved by means of systems comprising a plurality of towing units which intervene on the supporting platform dragging it in a predetermined direction of movement. It has been found that the currently used systems have various drawbacks, the first of which consists in the high number of towing units which are installed. More specifically, two or more towing units, normally electrically actuated, are currently installed for each storage and/or loading positions and may or may not intervene on the platform at the same time. A high energy consumption and a high risk of failure thus results, which translate into major costs and continuous maintenance operations. This aspect is obviously critical in terms of management costs, particularly in the case of large-size car parks.

Another drawback is in that the currently used towing units move the platform along one only predetermined direction. In other words, the entering or exiting of the platform into and from the storage position is obtained by means of a corresponding translation of the platform along a direction which is invariable in all cases. So, in automated car parks of the known type, it is not actually possible to move a platform along different directions, e.g. orthogonal to each other, unless appropriate stations equipped with complex moving systems are provided, which reduce the total useful space available for parking. This aspect considerably affects storage and redelivery time of the cars, times which could be much more shorter were a more versatile moving system used. Furthermore, it is worth noting that the current "mono-directional" movement of the platforms is a drawback also in terms of design, and thus exploitation, of the available space. Substantially, in many installations, the space potentially usable for storage is not exploited precisely because of the system rigidity in terms of movement.

Again, another drawback of the systems of known type is in the configuration and reliability of the towing units installed to move the car loading platforms. Furthermore, poor stability during the towing of the platforms along the direction of movement is also found.

In light of the above, it is a main task of the present invention to provide a moving assembly for making an automated car park which allows to solve the technical drawbacks described above. In the scope of this task, it is the first object of the present invention to provide a moving assembly capable of moving a loading platform of a car in two or more directions of movement. It is a further object of the present invention to provide a moving assembly which is provided with reliable towing units capable of guaranteeing a stable translation of the platform. A not last object of the present invention is to provide a moving assembly which is reliable and easy to make at competitive costs.

### SUMMARY OF THE INVENTION

The present invention thus relates to a moving assembly according to appended claim 1 for moving a vehicle between at least one first storage station and at least one second storage station along at least one first direction of movement. In particular, the assembly according to the invention is characterized in that it comprises:
- at least one supporting platform of said vehicle, in which such a platform comprises a body, which defines an upper resting surface for the vehicle and a lower surface, opposite to said upper surface; the platform further comprises a plurality of moving wheels and at least one guiding bar, which develops along a first longitudinal development direction, from the side of said lower surface;
- a first towing unit and a second towing unit, configured to interact with said guiding bar and determine the dragging of the platform along said at least one first direction of movement; said first unit and said second unit can be installed in a first position characteristic of said first station and of said second storage position, respectively.

According to the present invention, each unit comprises at least one first row of first meshing and towing wheels and a second row of second meshing and towing wheels. Such a second row is opposite to said first row. The first unit and the second unit each define a rectilinear meshing stretch for the guiding bar of said platform, at which the first meshing and towing wheels and the second meshing and towing wheels are configured to come into contact and interact with said guiding bar on opposite sides. The meshing stretches are aligned so as to define said first direction of movement.

Furthermore, according to the invention, the guiding bar has an extension, measured along said first longitudinal development direction, greater than the minimum distance, measured along said first direction of movement, between said meshing stretches.

### BRIEF DESCRIPTION OF THE FIGURES

Further features and advantages of the present invention will be more apparent in the following detailed description provided by way of non-limitative example and illustrated in the accompanying figures, in which:
- figures from 1 to 4 show a first possible embodiment of a moving assembly according to the present invention;

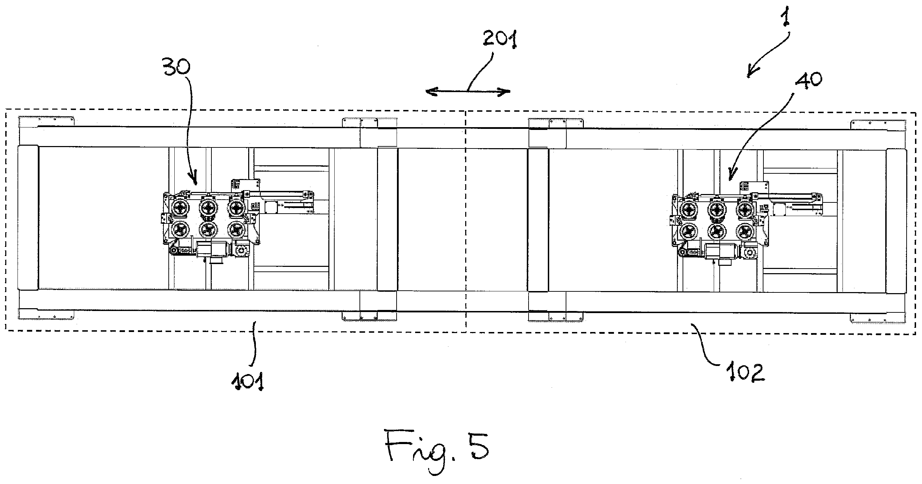

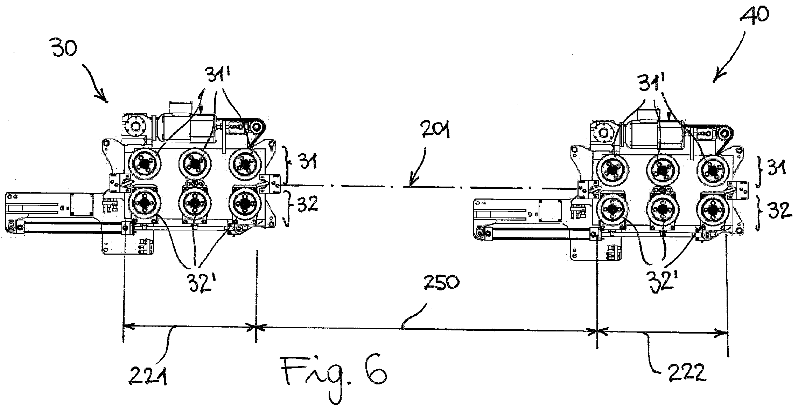

- figures 5 and 6 show sets of components of the moving assembly according to the invention;
- figures from 7 to 11 are schematic views related to the operating principle of the moving assembly in figures from 1 to 4;
- figures from 12 to 16 are views related to a first possible embodiment of a towing unit of a moving assembly according to the present invention;
- figures from 17 to 19 are views related to a set of components of a towing unit of a moving assembly according to the present invention;
- figures from 20 to 22 are views related to a further set of components of a towing unit of a moving assembly according to the present invention;
- figures from 23 to 25 show possible operative configurations of a moving assembly according to the present invention;
- figures from 26 to 30 are views related to a second possible embodiment of a towing unit of a moving assembly according to the present invention;
- figures from 31 to 33 are views related to a further set of components of a towing unit of a moving assembly according to the present invention;
- figures 34 and 35 show a platform of a moving assembly according to the present invention;
- figures from 36 to 40 show a possible embodiment of moving wheels of a platform of a moving assembly according to the invention;

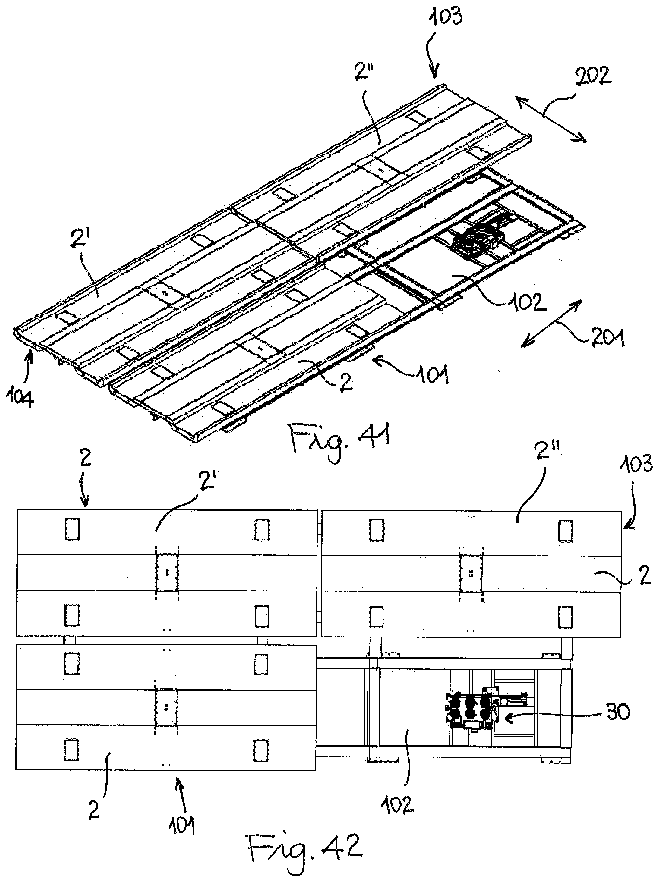

- figures 41 and 42 show a possible embodiment of an automated car park comprising a plurality of moving assemblies according to the present invention;
- figures from 43 to 48 are schematic views related to the operating principle of the automated car park in figures from 41 to 42;
- figures from 49 to 52 are views related to a further possible embodiment of a platform of a moving assembly according to the present invention;
- figures 53 and 54 are schematic views related to a possible embodiment of a car park comprising a plurality of moving assemblies according to the invention.

### DETAILED DESCRIPTION OF THE INVENTION

Figures from 1 to 4 show a possible embodiment of a moving assembly according to the present invention generically indicated by reference numeral 1. In particular, such an assembly 1 comprises a supporting platform 2 for a vehicle. More specifically, the platform 2 comprises a plurality of moving wheels 28, which allow the sliding of the platform itself on a resting surface or floor. Such a surface may be defined by a generic floor. In an alternative solution, shown in the figures, artificial surfaces 13, e.g. made of metallic material, may be installed on the resting surface to promote the rolling of the wheels 28. In general, the floor or said artificial surfaces 13 define a resting plane for the moving wheels 28. The platform 2 comprises a body 24 which defines an upper surface 21, on which the vehicle is intended to rest, and a lower surface 22 opposite to the upper surface 21. The moving wheels 28 of the platform 2 are operatively installed at such a lower surface 22.

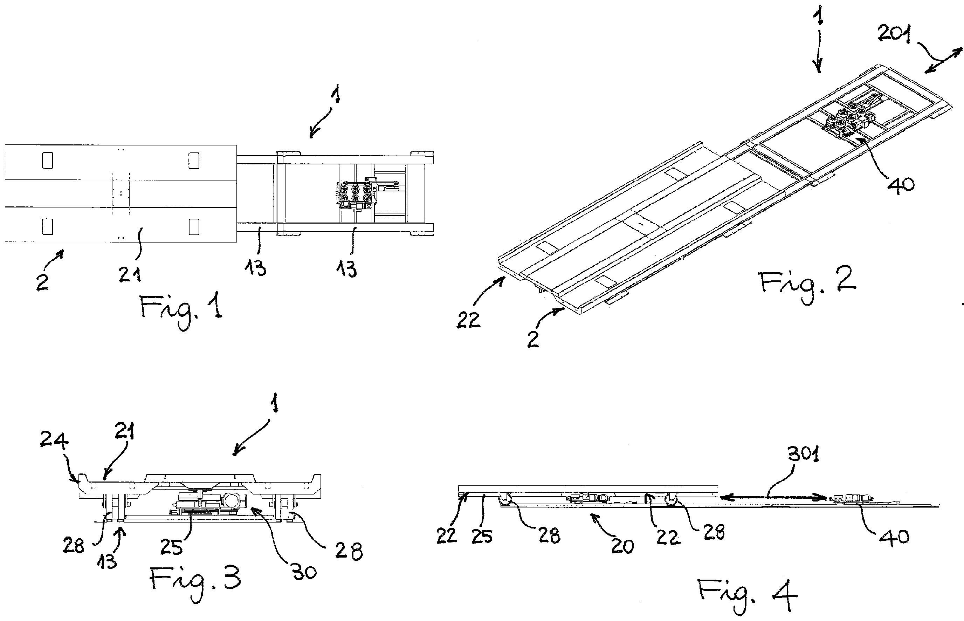

The platform comprises a guiding bar 25 (or blade 25), which develops along a first longitudinal development direction 301 (indicated in Figure 4). More specifically, the bar 25 emerges from the lower surface 22 of the platform 2 towards the resting surface. The assembly 1 according to the invention comprises at least one first towing unit 30 and one second towing unit 40 which interact with the bar 25 of the platform 2 to determine the movement thereof along a predetermined first direction 201 (see Figures 2 and 5). In Figure 5, the platform 2 is not illustrated in order to show the arrangement of the towing units 30, 40 indicated above in detail. According to the invention, the first unit 30 and the second unit 40 are installed in a position characteristic of a first storage station (indicated by the dashed rectangle with reference numeral 101) and by a second storage station (indicated by the dashed rectangle with reference numeral 102), respectively. It is worth noting that for the objects of the present invention, the expression "storage station" also indicates a station/position at which the vehicle is loaded, unloaded or loaded/unloaded onto/from a corresponding platform.

With reference to Figure 6, each towing unit 30, 40 comprises a plurality of meshing and towing wheels adapted to interact with the bar 25 of the platform 2 to determine the movement itself. More specifically, each towing unit 30, 40 comprises a first row 31 of first meshing and towing wheels 31' and a second row 32 of second meshing and towing wheels 32' opposite to said first row 31. The first unit 30 and the second unit 40 define, respectively, a first rectilinear meshing stretch 221 and a second rectilinear meshing stretch 222 for meshing with the guiding bar 25 of the platform 2. Along such rectilinear stretches 221, 222, the first meshing and towing wheels 31' and the second meshing and towing wheels 32' act, on opposite sides 125', 125", on the guiding bar 25 ultimately causing the dragging of the platform 2.

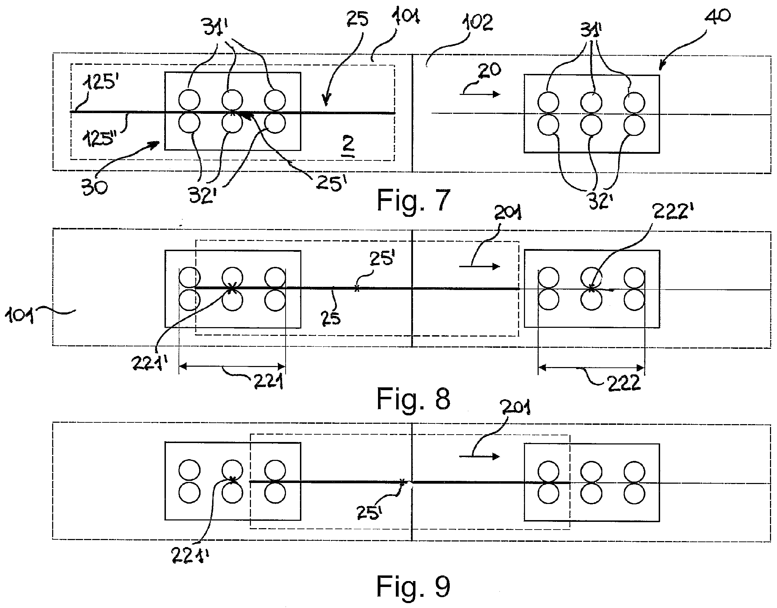

With reference to figure 7, according to the invention, the two towing units 30, 40 assume at least one first operative configuration in which the first meshing stretch 221 and the second meshing stretch 222 are aligned so as to define a first predetermined advancement direction 201 for the guiding bar 25, and thus for the platform 2.

According to the invention, the guiding bar 25 of the platform 2 is configured so as to display an extension, measured along said first longitudinal development direction 301, which is greater than the minimum distance 250, measured along said first predetermined direction 201, between the first stretch 221 and the second stretch 222 (see figure 6). By means of this technical solution, during the translation along the first direction 201, the guiding bar 25 is constantly subjected to the dragging action of at least two meshing wheels 31', 32' (which are opposite each other) of at least one of the towing units 30, 40.

With this regard, figures from 7 to 11 are schematic views which allow to understand the principle described above. In the condition in figure 7, the platform 2 occupies the first station 101 and a portion of the guiding bar 25 is arranged in the first meshing stretch 221 configured by the meshing and towing wheels 31', 32' of the first unit 30. Preferably, when the platform 2 occupies the first station 101, the median point 25' of the bar 25 coincides with the median point 221' of the first meshing stretch 221 (evaluated along the first direction 201).

The first unit 30 is thus actuated in order to displace the platform 2 towards the second station 102. The meshing and towing wheels 31', 32' act on opposite sites 125', 125" of the bar 25, thus determining an advancement of the platform 2 along the first predetermined direction 201 (see figure 8).

Figure 9 shows a condition for which the bar 25 is simultaneously meshing on the first stretch 221, configured by the first unit 30, and the second stretch 222, configured by the second unit 40. This condition is reached by virtue of the relation described above between the length of the bar 25 and the minimum distance between the two meshing stretches 221, 222. In the condition in figure 9, the platform 2 occupies a substantially intermediate position between the first station 101 and the second station 102.

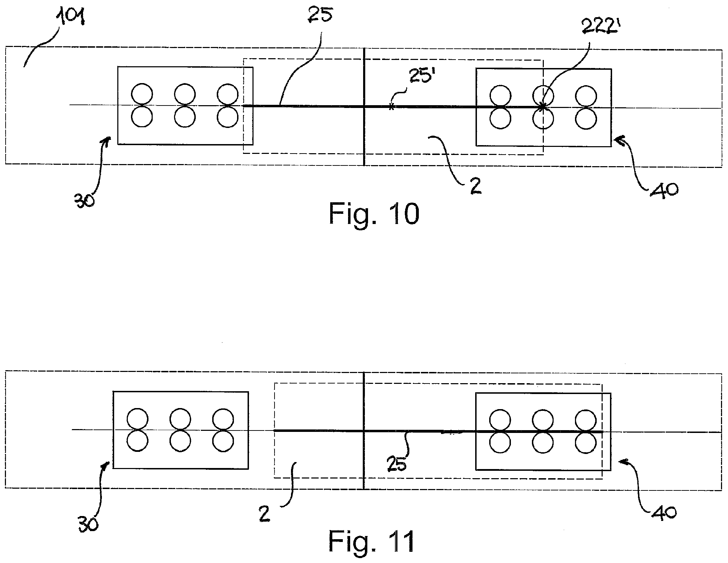

As the advancement continues along direction 201, the meshing on the bar 25 exerted by the first unit 30 ceases and the platform 2 is dragged only by the second unit 40 (Figure 10). The dragging action ends when the platform 2 occupies the second station 102 and more specifically when the median point 25' of the bar 25 reaches the median point 222' of the second meshing stretch 222 (figure 11).

Figures from 12 to 16 refer to a first possible embodiment of a towing unit 30, 40 according to the present invention. For the sake of convenience, reference will be made hereinafter to the first unit 30 only, but the considerations which follow also apply to the second unit 40. As illustrated, the wheels 31', 32' are at least in part or preferably all motorized. With this regard, the first unit 30 comprises actuating means 60 of the meshing and towing wheels 31', 32'. Preferably, such actuating means 60 comprise an electric motor 61 and a mechanical transmission which operatively connects the electric motor 61 to the wheels 31', 32'.

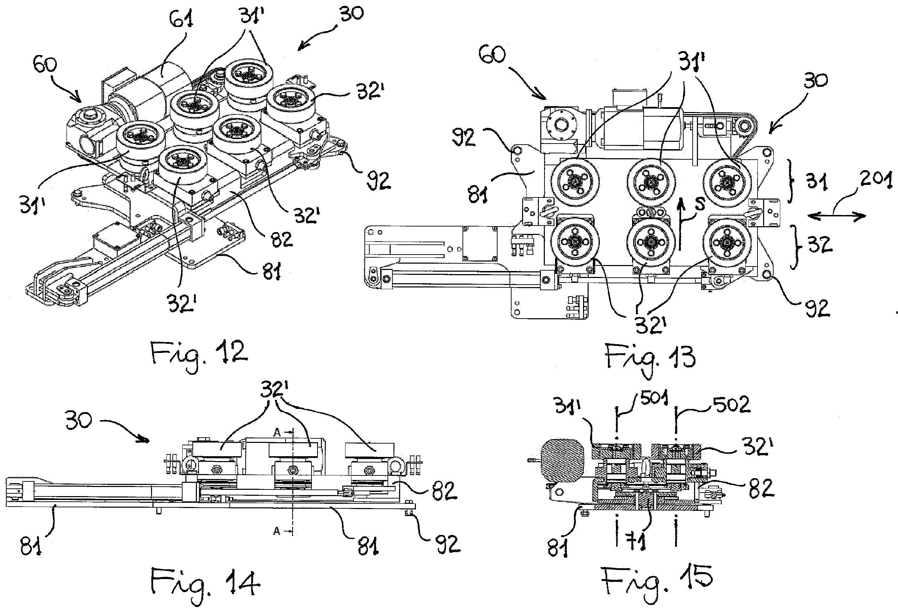

With reference to figure 12, the first unit 30 preferably comprises a base 81 connectable to the floor by means of fixing means 92, such as for example screws. The first unit 30 further comprises a moveable supporting frame 82 installed on said base 81, when present, or alternatively on the floor. Such a moveable frame 82 is configured to support the actuating means 60 indicated above and the meshing and towing wheels 31', 32'. Each of these wheels is mounted on a supporting module 34, 34', the embodiments of which are described below. As indicated in greater detail below, the expression "moveable frame" indicates a condition in which the frame is rotatable, about a rotation axis, with respect to the base 81. The possibility of providing a "fixed" frame, i.e. which cannot rotate with respect to the base 81, for some applications is within the scope of the present invention in all cases.

In the case in point shown in figures from 12 to 16, each row 31, 32 of wheels comprise three meshing and towing wheels 31', 32'. Each wheel 31' of the first row 31 is opposite to a corresponding wheel 32' of the second row 32. However, the two rows 31, 32 could comprise a different number of wheels as long as greater than or equal to two so as to define a plurality of pairs of opposite wheels, one belonging to the first row 31 and the other belonging to the second row 32.

In the solution shown in figures from 12 to 16, the meshing and towing wheels 31' of the first row 31 have a rotation axis 501 which is fixed with respect to the moveable frame 82, while the meshing wheels 32' of the second row 32 have a rotation axis 502 which is moveable with respect to the moveable frame 82 for the purposes described below. In an alternative embodiment, the wheels of both rows 31, 32 could have a fixed rotation axis or a moveable rotation axis. According to a further embodiment, each row 31, 32 could comprise meshing and towing wheels with fixed rotation axis alternating with meshing and towing wheels with moveable rotation axis.

Figures from 17 to 19 illustrate the detail formed by a first supporting module 34 configured to support a meshing and towing wheel 31' with a fixed rotation axis 501. In detail, the first supporting module 34 comprises a central shaft 35 on a first end of which the wheel 31' is fitted. The first module 34 also comprises a main body 36 stably connected to the moveable frame 82, by means of fixing means 93, such as screws or the like. The central shaft 35 is free to rotate with respect to the fixed body 36 by means of bearings 37. The meshing wheel 31' is connected to said first end of the central shaft 35 so as to emerge in position above the moveable support frame 82. A toothed wheel 39 (pinion), which instead emerges in a position substantially underneath the moveable supporting frame 82, is connected near a second end, opposite to said first end.

Again with reference to figures from 17 to 19, preferably the meshing and towing wheels 31' with fixed rotation axis 501 are externally coated with elastic means, which may be a polyurethane coating or a small inner tube. The pressure on the guiding bar 25 is exerted by the elasticity of said elastic means.

Figures from 20 to 22 show in detail a second supporting module 34', which configures a moveable rotation axis 502, with respect to the moveable frame 82, for a corresponding meshing and towing wheel 32'. Such a second module 34' has a configuration partially corresponding to that of the first module 34 described above. With respect to the latter, the main body 38 is moveable with respect to the moveable frame 82 and guided in the movement by a guiding body 42, which is instead fixed to the moveable frame 82 itself by means of appropriate fixing means 93', such as screws or the like. The mobility of the main body 38 is regulated by means of a pressure screw 44 acting on a spring element 45 interposed between the main body 38 itself and the guiding body 42. As a whole, the guiding body 42, the pressure screw 44 and the spring element 45 define pressure means which act on the main body 38 so as to constantly push the rotation axis 502 of the wheel in a direction orthogonal to the axis itself.

With reference to figure 13, such a second module 34' is installed on the moveable frame 82 so that the reference pressure means exert a thrust action (indicated by the arrow S) according to a direction orthogonal to the direction of advancement 201 of the guiding bar 25. In this manner, the contact of such a bar 25 is ensured against the outer surfaces of the meshing and towing wheels 31', 32' so as to guarantee the necessary dragging force for the bar itself and thus for the platform 2.

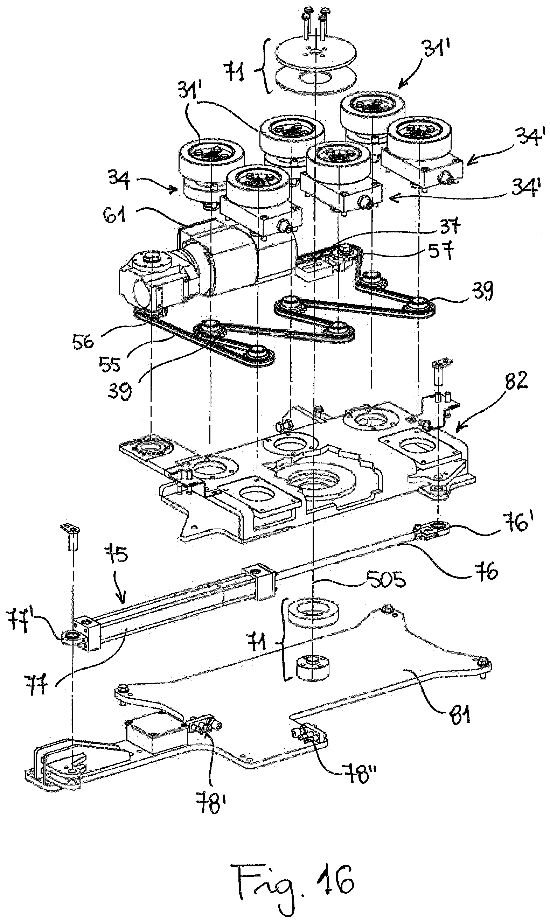

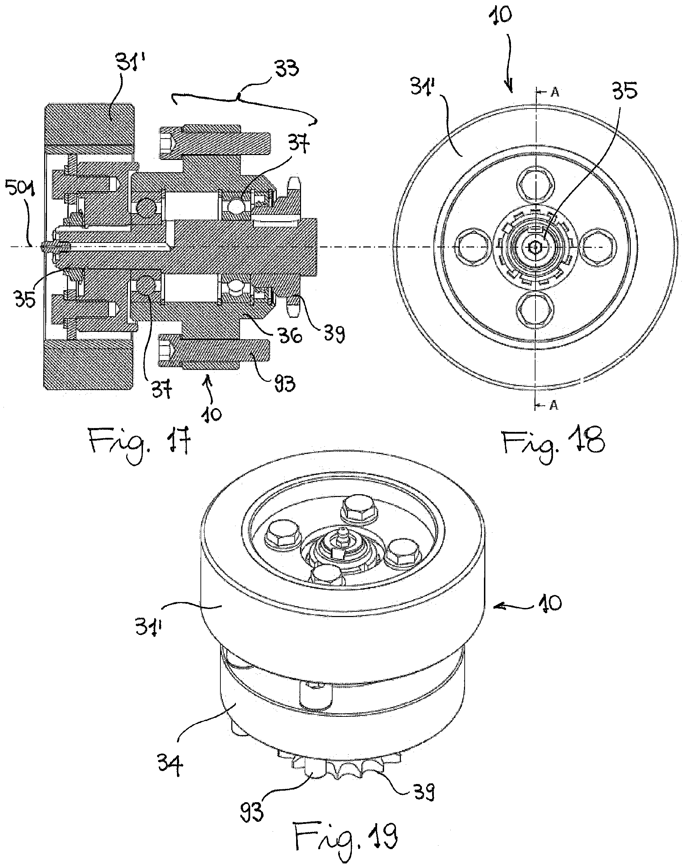

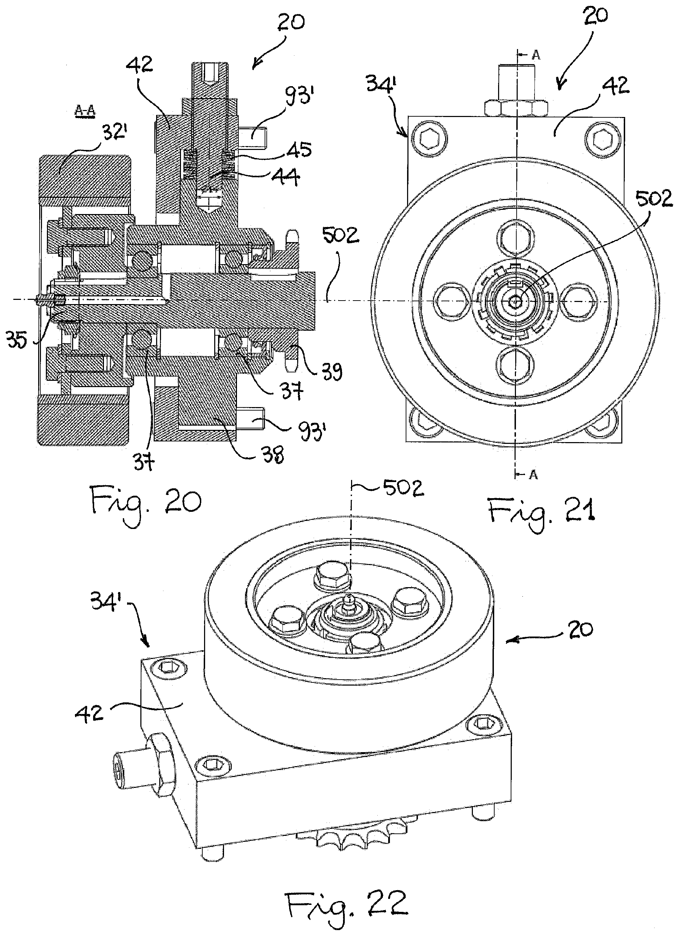

Figure 16 is an exploded view of a first towing unit 30. With reference to such a figure, the first unit 30 preferably includes a mechanical transmission comprising a drive belt 55 (or other functionally equivalent means, such as for example a chain) and a power wheel 56 operatively connected to the shaft of the electric motor 61, preferably by means of a ratio motor. The belt 55 is wound about the power wheel 56, the pinion 39 of each meshing and towing wheel 31', 32' (with fixed axis 501 or moveable axis 502) and preferably about the toothed wheel 57 of a tensioning element 37. The torque generated by the electric motor 61 is transferred by the belt 55, by means of the power wheel 56, and thus to the meshing and towing wheels 31', 32' by means of the respective pinions 39. The wheels 31', 32' become actual drive wheels in this manner. The interaction with the guiding bar 25 of the platform 2 transforms the torque provided to the wheels 31', 32' into a friction force which determines the advancement of the bar 25 itself, i.e. of the platform 2, along the first predetermined direction 201.

According to a first preferred embodiment of the invention, the first unit 30 comprises orientation means of the first meshing stretch 221. Such means are substantially configured to vary the dragging direction of the guiding bar 25, i.e. of the platform 2. Preferably, the orientation means are configured to vary the positioning angle of the moveable frame 82 with respect to the base 81. Such means implement a rotation of the moveable frame 82 with respect to the base 81. This rotation thus translates into a corresponding variation of the orientation of the advancement stretch 221 defined by the two rows 31, 32 of meshing and towing wheels 31', 32'.

Again with reference to figures from 12 to 16, according to a first possible embodiment, the orientation means are configured to rotate the moveable frame 82 between a first predetermined angular position or a second predetermined angular position different from the first preferably by 90 degrees. The moveable frame 82 is installed on the base 81 (or alternatively on the translation plane of the platform 2, if the base 81 is not provided) by means of kinematic coupling means 71 which configure a rotation axis 505. The orientation means comprise a mechanical actuator 75 (e.g. hydraulic, pneumatic or electric), which includes a moveable element 76 which moves with respect to a body 77. A first end 77' of the body 77 is stably fixed to the base 81, while a free end 76' of the moveable element 76 is connected to the moveable frame 82.

Again with reference to figures from 12 to 16, the first unit 30 comprises first sensor means 78' and second sensor means 78" configured to detect the reaching of the first angular position and of the second angular position, respectively. Such sensor means 78', 78" are connected to a first control unit (not shown) of the first unit 30. Such a control unit is configured to activate the orientation means and, more specifically, to activate the actuator 75.

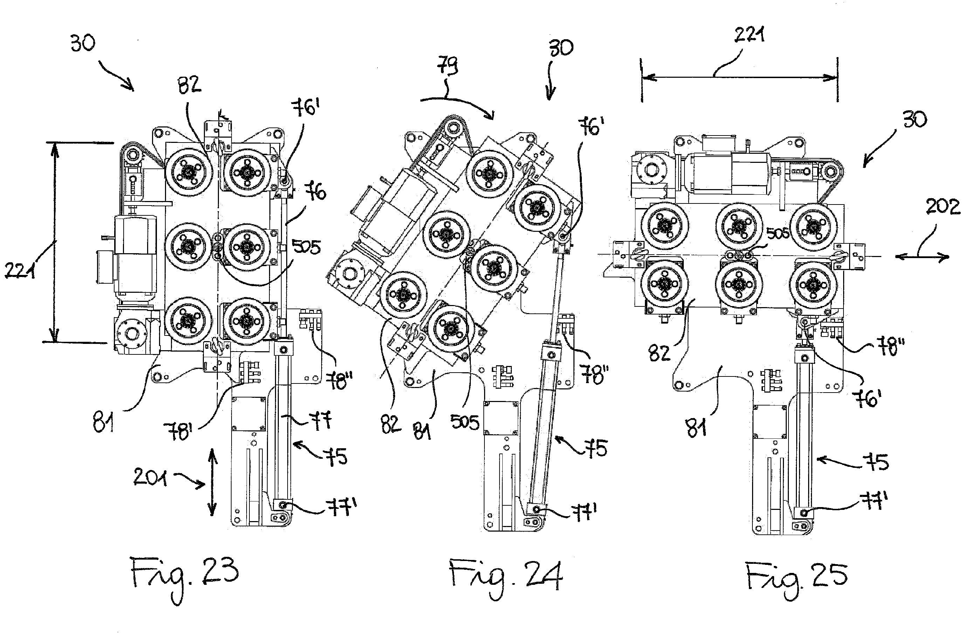

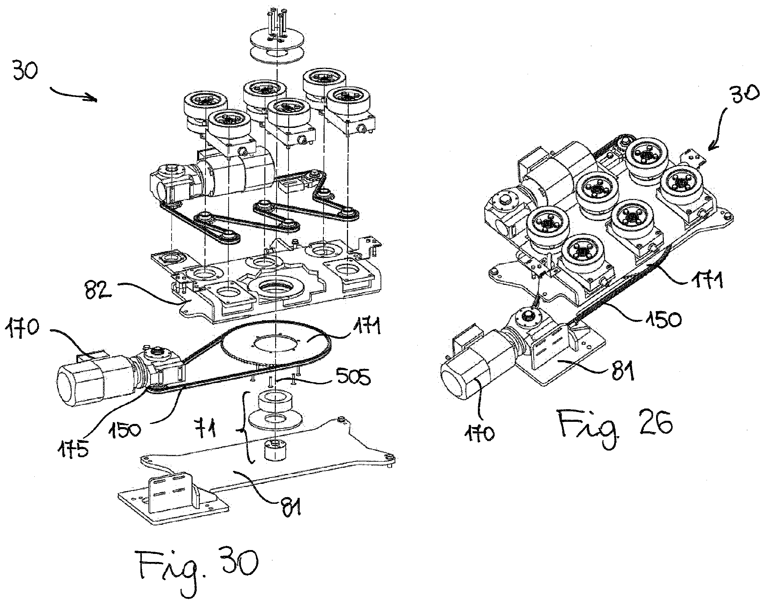

Figures from 23 to 25 allow to observe the operating principle of the orientation means described above. More specifically, figure 23 shows the moveable frame 82 in a possible first angular position, in which the meshing and towing wheels 31', 32' of the first towing unit 30 configure the first meshing stretch 221, which defines a first predetermined advancement direction 201. In the illustrated example, the moveable element 76 of the actuator 75 is completely extended in a direction substantially parallel to the first predetermined advancement direction 201.

With reference to figure 24, when the orientation means are activated, the moveable element 76 of the actuator 75 is retracted towards the body 77 causing the rotation, about the respective axis 505, of the moveable frame 82 with respect to the base 81. In figure 24, the sense of such a rotation is indicated by the arrow 79. The comparison between figures 23 and 24 allows to observe that the rotation of the moveable frame 82 determines a corresponding variation of the orientation of the first meshing stretch 221.

The rotation of the moveable frame 82 about the axis 505 is concluded when the predetermined second angular position is reached (see figure 25) detected by means of the second sensor means 78". In this condition, the first meshing stretch 221 defines a predetermined second direction of movement 202 for the bar 25 of the platform 2, and thus for the platform itself. Such a predetermined second direction 202 is substantially orthogonal to the first direction 201 configured with the first angular position (Figure 23).

Figures from 26 to 30 show a second possible embodiment of the orientation means of the first towing unit 30, which differ from the orientation means described above in that they are configured to rotate the supporting frame 82 with respect to the base 81 by any angle. In this manner, it is advantageously possible to orient the first stretch 221 according to any direction in which it is intended to drag a platform 2. It is apparent that this possibility confers greater operative versatility to the first towing unit 30.

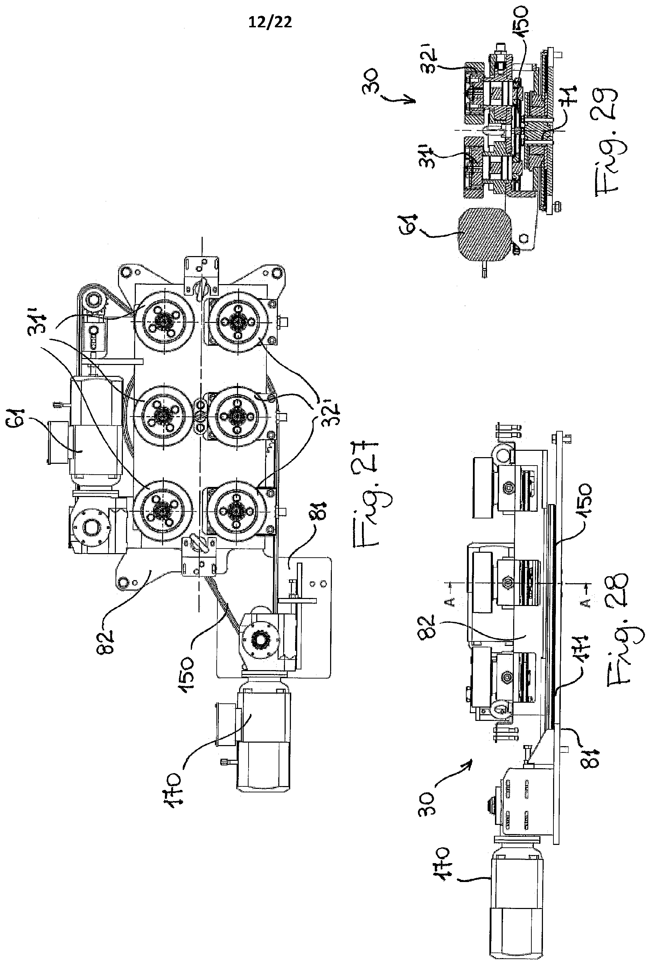

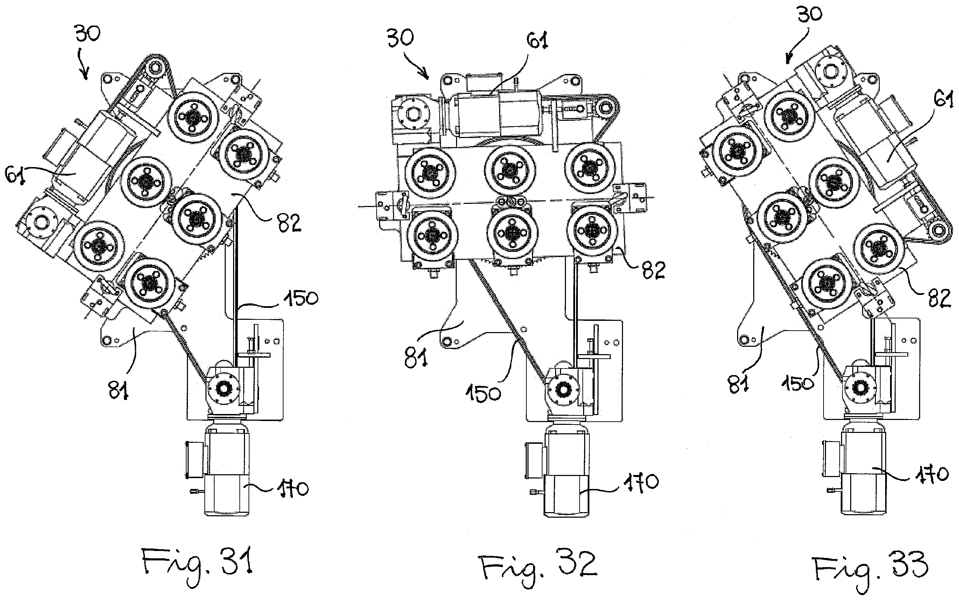

More specifically, the orientation means comprise a central wheel 171 coaxial to the rotation axis 505 defined by the kinematic coupling means 71 interposed between the base 81 and the moveable frame 82. The central wheel 171 is installed between the base 81 and the moveable frame 82 so as to be integral with the latter (see figures 28 and 29). The orientation means also comprise motors 170 (e.g. an electric motor) to which a wheel-pinion is operatively connected 175. The latter is connected to the central wheel 171 by means of a drive belt 150 (or other functionally equivalent means) which preferably provides a reduction transmission ratio.

Figures from 31 to 33 show different angular positions which can be reached by the moveable supporting frame 82 of the first towing unit 30 shown in figures from 26 to 30. It is worth noting that with respect to the base 81, intended to be fixed to the resting surface (floor), the moveable frame 82 may be advantageously oriented in any direction by appropriately controlling the motor means 170. The latter may be controlled by the control unit of the first unit 30 as needed.

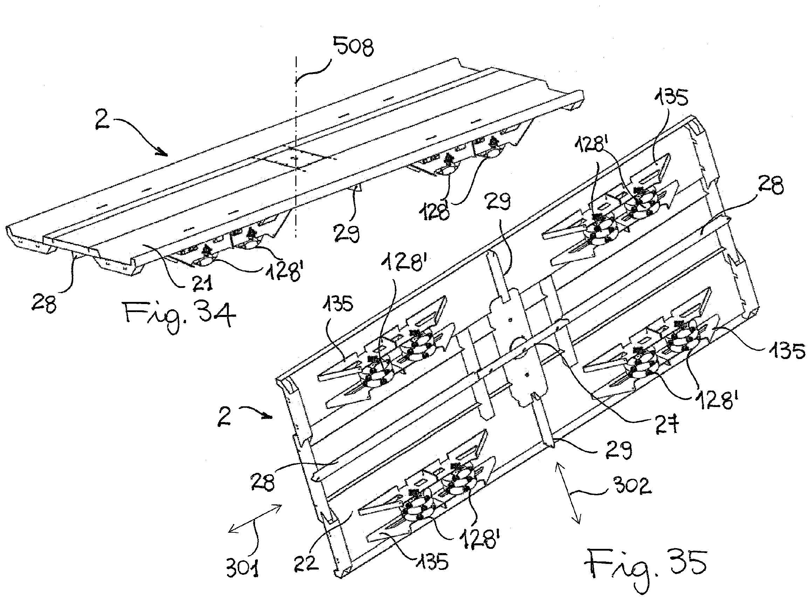

Figures 34 and 35 show a first possible embodiment of a platform 2 also comprising two transversal portions 29, which emerge from the lower surface 22 so as to be aligned according to a transversal development direction 302, which is substantially orthogonal to the first longitudinal development direction 301. In such an embodiment, the central longitudinal portion 27 of the guiding bar 25 is rotatable about a rotation axis 508, which is substantially orthogonal to the resting surface of the platform itself. The bar 25 further comprises two fixed longitudinal portions 28, which are symmetric with respect to the central longitudinal portion 27.

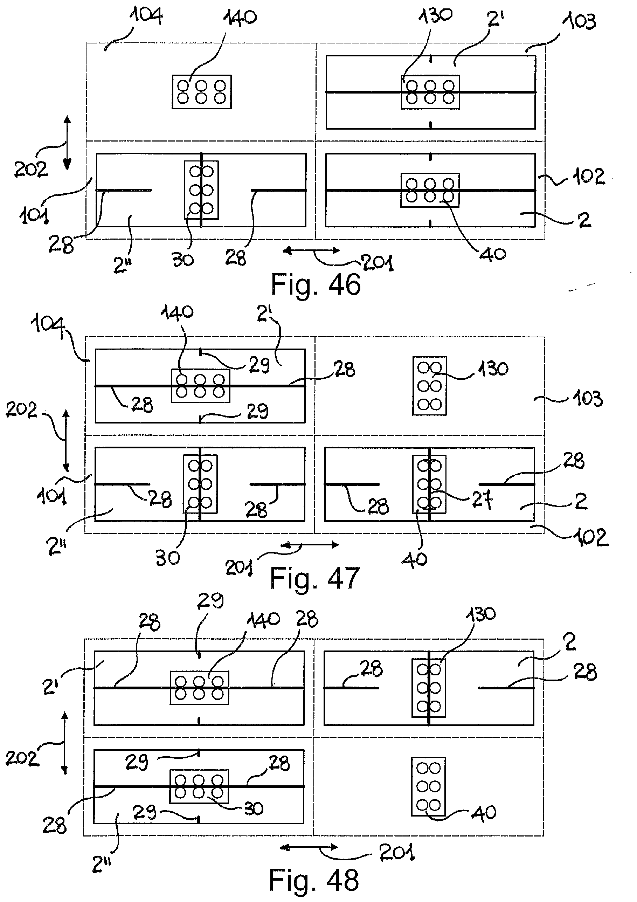

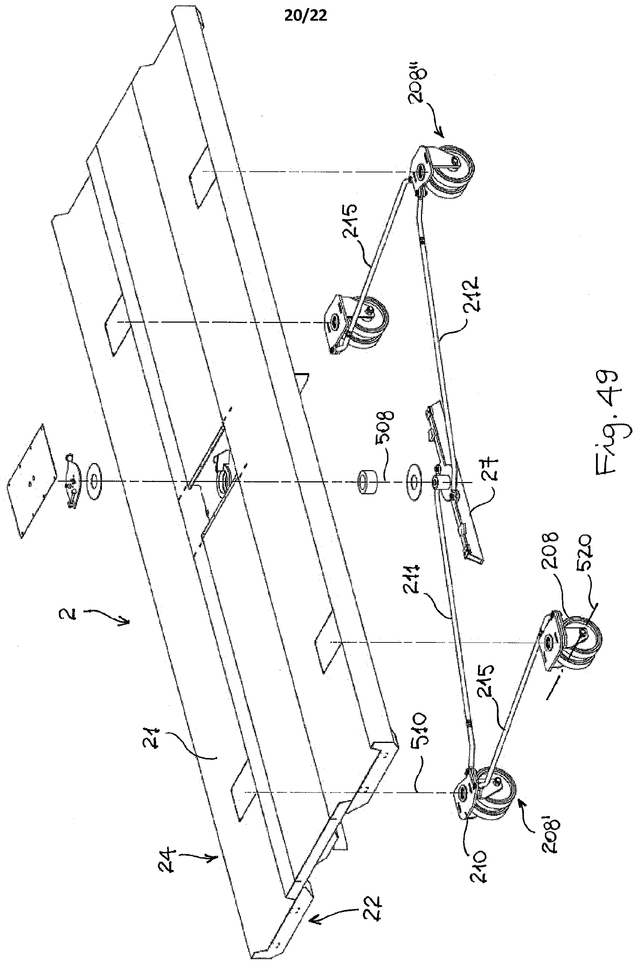

In particular, the central portion 27 is rotatable, about the axis 508, between a first position, in which it is aligned with the side portions 28 along said first development direction 301, and a second portion, at which it is aligned with the fixed transversal portions 29, i.e. with the transversal development direction 302. When the central portion 27 occupies the first operative position, it configures a first guiding bar 25, together with the fixed longitudinal portions 28, while in the second operative position it configures a further guiding bar (indicated by reference numeral 25' in figures 46 and 47), which is developed along the transversal direction 302, with the fixed transversal portions 29.

As described in greater detail below, the central portion 27 rotates by effect of the rotation of the moveable frame 82 determined, in turn, by the activation of the orientation means of the towing unit 30. The platform 2 preferably comprises mechanical limit stops, e.g. consisting of springs which retain the central portion 27 in the two indicated positions (first and second) when the portion itself is not retained by the meshing and towing wheels 31',32' during the translation of the platform 2.

Again according to a preferred embodiment, the platform 2 is provided with multidirectional means 128' configured to allow a movement of the platform according to different directions. As shown in figures 34 and 35, sets of wheels 128 which support the body 24 of the platform 2 in predetermined points are preferably provided. Each set 128 consists of a series of wheels 128' fitted on a same shaft 130 by means of appropriate bearing means 137. The ends of the shaft 130 are mounted on appropriate brackets 135 which emerge from the lower surface 22 of the body of the platform 2.

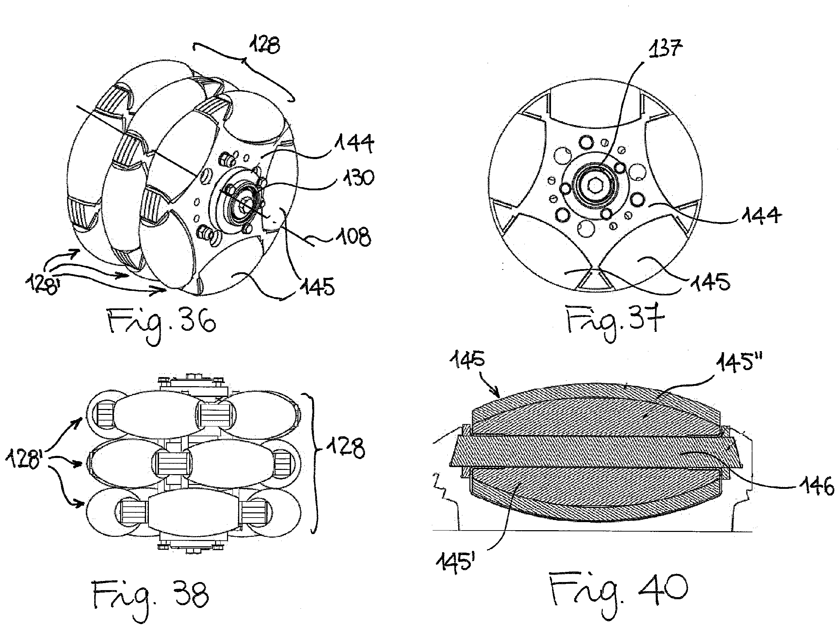

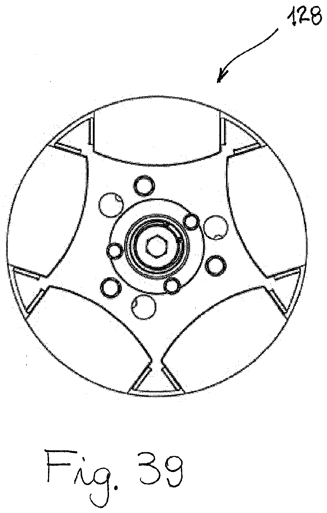

Figures 37, 38 and 39 show in greater detail a possible embodiment with a set of wheels 128', each of which is defined by a central hub 144 on which roller elements 145 are installed in rotatable manner. Figure 40 is a section view which allows to observe in detail the structure of such wheels 128'. The central hub 144 configures a plurality of axes 146, each of which for the rotation of a corresponding roller 145. The latter is defined by a central core 145' surrounded by an outer coating 145" intended to rest directly on the resting surface or the floor. Such axes are configured so that the outer surfaces of the rollers 145 define a circumference portion for the wheels 128'.

The particular conformation of the wheels 128' described above allows the translation of the platform 2 according to at least two predetermined directions, the first of which is substantially orthogonal to the rotation axis 108 of the wheels 128', while the second is substantially parallel to the axis 108 itself.

The configuration of the wheels 128' described above and the central portion 27 of the guiding bar 25 make the platform 2 functionally versatile and combinable with a towing unit 30, 40 provided with orientation means of the corresponding meshing unit 221, 222 according to that described above to comment figures from 13 to 33. In particular, the combination of such a platform 2 with the respective towing unit 30,40 advantageously allows to make automatic car parks in which the platforms 2 may be moved in two predetermined directions 201, 202.

With this regard, figures from 41 to 48 relate to an automatic car park with four stations 101, 102, 103 and 104 comprising a plurality of moving assemblies according to the present invention. In particular, the automated car park comprising three platforms 2, 2', 2" which can move as a whole along two mutually orthogonal directions 201, 202. One towing unit 30, 40, 130, 140 is provided for each of said stations 101, 102, 103 and 104. More specifically, each of said two units 30, 40, 130, 140 comprises orientation means of the corresponding advancement stretch 221, 222, 223, 224.

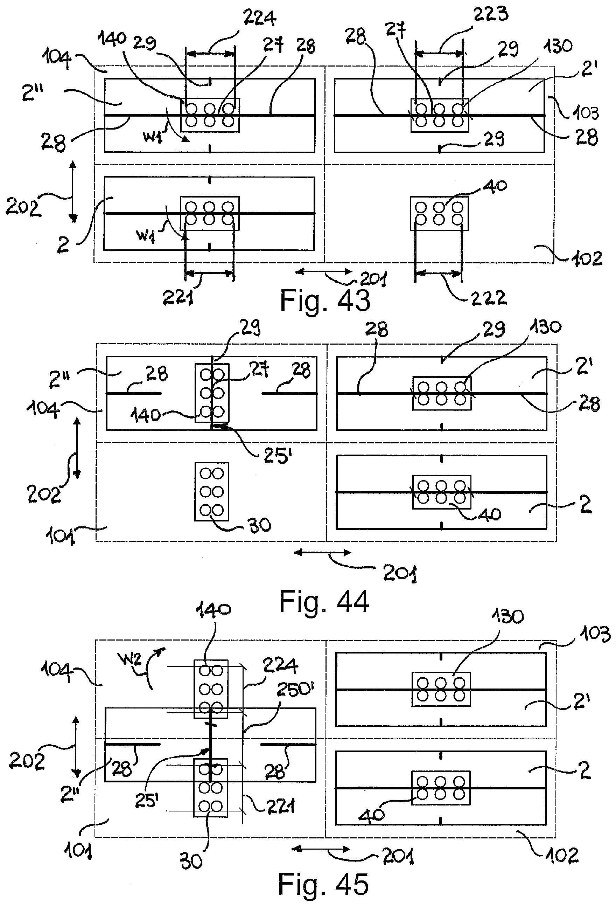

The schematic views shown in figures 43-48 allow to understand the operating principle of this four-station movement assembly. In particular, the three platforms 2, 2', 2" respectively occupy the first station 101, the third station 103 and the fourth station 104. For each platform 2, 2', 2", the central guiding portion 27 is arranged in the corresponding meshing stretch 221, 223, 224 of the corresponding towing unit 30, 130, 140. In particular, for each platform 2, 2', 2" the rotation axis 508 of the central portion 27 coincides with the rotation axis 505 of the moveable frame 82 of the corresponding unit 30, 130, 140.

The assumption is considered below in which there is the need to move the first platform 2 from first station 101 to the third station 103. Furthermore, it is assumed that in the starting position the meshing stretches 221, 222, 223, 224 of all the towing units 30, 40, 130, 140 are oriented parallel to the first predetermined direction 201. Starting from this condition, in a first step the first platform 2 is moved from the first station 101 to the second station 102 according to a principles described above to comment figures from 7 to 11.

Either later or concurrently, the orientation means of the first towing unit 30 and of the fourth towing unit 140 are activated so as to rotate the corresponding meshing stretch 221, 224 according to the first rotation direction (indicated by the arrow W1). In the case of the third platform 2", the central guiding position 27 is rotatably dragged in the first sense of rotation W1 until it is aligned with the two corresponding transversal portions 29 configuring as a whole a transversal guiding bar 25' (see figure 44), i.e. oriented along the second predetermined direction 202. At this point, the fourth towing unit 140 and the first towing unit 30 are activated so as to drag the third platform 2" along the second predetermined direction 202 (see figure 45), according to a principle similar to that provided for moving along the first direction 201. In other words, the meshing stretch 221 of the first unit 30 and the meshing stretch 224 of the second unit 40 are aligned and their minimum distance (indicated by reference numeral 250'), measured along the second predetermined direction 202 is shorter than the length of the transversal guiding bar defined as a whole by the central portion 27 and by the transversal portions 29. The dragging of the third platform 2" ends when it occupies the first station 101 (see figure 46).

The orientation means of the fourth unit 140 are then activated to rotate the corresponding meshing stretch 224 parallel to the first predetermined direction 201. This is performed in order to activate, when such a rotation is completed, the third unit 130 and the fourth unit 140 to then drag the second platform 2' from the third station 103 to the fourth station 104 (Figure 47).

Following the displacement of the second platform 2' to the second station 104, the orientation means of the second unit 40 and of the third towing unit 130 are activated again to align the corresponding stretches 222, 223 along the second predetermined direction 202. At this point, the second unit 40 and the third unit 130 are activated again for the purpose of dragging the first platform 2 from the second station 102 to the third station 103 (Figure 48), thus reaching the desired position.

The moving principle described above may be applied to automated car parks which have a higher number of stations and platforms. For each station, a corresponding towing unit may be provided, which may have or not orientation means of the corresponding meshing stretch according to the position assumed in the automated car park.

Figures from 49 to 52 refer to a further possible embodiment of a platform 2 of an assembly according to the invention. With respect to the embodiment shown in figures from 34 to 40 described above, in this case the use of wheels 208 of the traditional type is envisaged, the wheels being operatively connected to the central guiding portion 27 by means of a transmission mechanism configured to orient the rotation axis 520 of the wheels 208 in manner corresponding to the central portion 27. More specifically, four wheel assemblies 208' are envisaged, each of which comprising one or more wheels 208 supported by a wheel holder bracket 210 connected to the body 24 of the platform 2 so as to configure a rotation axis 510 for the wheel holder bracket 210. The bracket 210 of each set of wheels 208 is connected to the bracket of the closest set of wheels by means of a first transversal transmission arm 215. A first longitudinal transmission arm 211 connects a bracket 210 of a first set of wheels 208' to the central position 27, while a second longitudinal transmission arm 212 connects the bracket 210 of a second set of wheels 208", diametrically opposite to the first set of wheels 208', to the central position 27. As a whole, the longitudinal transmission arms 212 and the transversal transmission arms 215 configure a transmission mechanism of the moving wheels having the purpose of varying the orientation of the rotation axis 520 of the wheels 208 as a function of the position reached by the central portion 27 of the guiding bar 25 so as to vary the direction of movement (201-202) of the platform 2 in corresponding manner.

In figures from 50 to 52, it is apparent that the operating principle of the transmission mechanism in which the transmission arms 215, 212 maintain the rotation axis 520 of the wheels 208 parallel to the development direction of the central portion 27 of the platform 2. The latter is indicated with a dashed line for greater clarity of illustration. Thus, in such figures of the platform 2 only the central portion 27 rotatable about the axis 508 with respect to the platform 2 is shown with a solid line.

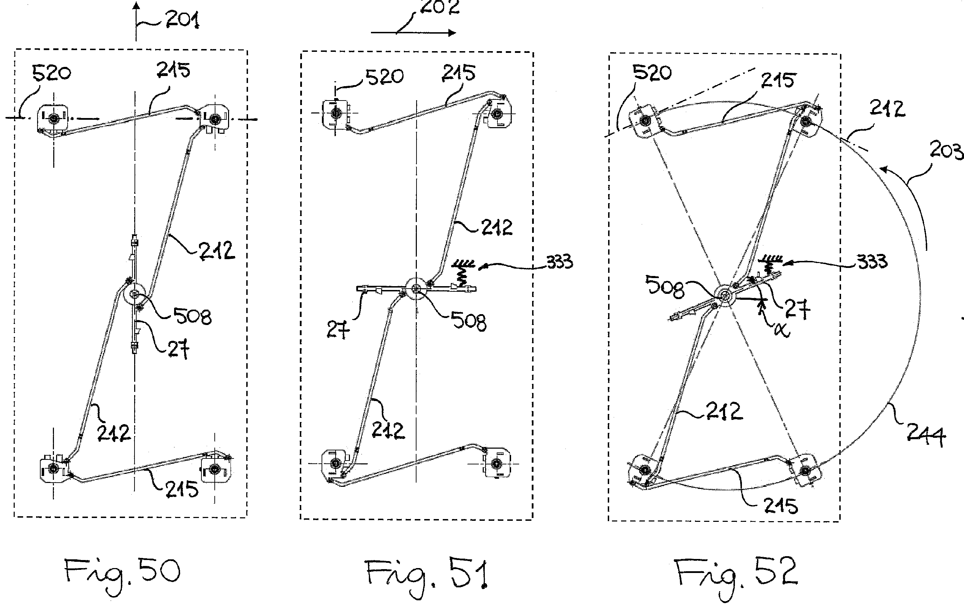

More specifically, in the condition in figure 50, the rotation axis 520 of the wheels 208 is perpendicular to the direction development of the central portion 27 of the bar 25 of the platform 2. In this condition, the platform 2 is free to move along the first predetermined direction 201 shown in figure 50. With reference to figure 51, it is worth noting that following the 90° rotation of the central portion 27, the longitudinal arms 212 and the transversal arms 215 intervene on the brackets 210 so as to vary the corresponding orientation of the rotation axis 520 of the wheels 208. In particular, with respect to the condition in figure 50, in the condition of figure 51 the orientation assumed by such a rotation axis 520 allows a movement of the platform in the second predetermined direction 202.

According to a further possible embodiment, the platform 2 further comprises locking means configured to lock the central portion 27 of the guiding bar thus preventing the relative rotation thereof with respect to the platform 2. In this manner, when the orientation means of the towing unit 30 are activated, the rotation of the moveable frame 82 about the corresponding rotation axis 505 determines a corresponding rotation of the entire platform 2. This aspect translates into the possibility of orienting the platform 2, and thus the vehicle parked on it, as desired. In the scope of automatic car parks, this possibility is very advantageous because it allows to orient the vehicle in a narrow space. It is worth noting that the possibility of orienting the platform 2 according to any direction is allowed by the action of said locking means in combination with the use of orientation means which may be of the type described above commenting the solution shown in figures from 27 to 33, i.e. provided to vary the orientation of the respective moveable frame 82, with respect to the fixed base 81, by any angle or alternatively of the type described to comment the figures from 23 to 26, i.e. adapted to vary the orientation of the moveable frame 82, with respect to the fixed base 81 by a predetermined angle (90°). In both cases, the platform 2 preferably has the configuration described above to comment figures from 49 to 51. With this regard, figure 52 shows the configuration assumed by the transmission mechanism of figures 50 and 51, during a rotation of the platform 2 about the axis 508 and following the activation of the aforesaid locking means. More specifically, figure 52 shows the transmission mechanism in an incipient step of a rotation of the platform 2 in the direction shown by reference numeral 203. At the beginning of the rotation, the longitudinal arms 212 turn by a specific angular rotation (angle α) with respect to the central portion 27 oriented in manner corresponding to the wheel holder brackets 210 and the transversal arms 215. Such an angular position (angle α) remains constant during the rotation of the platform. During such a rotation, the axes 510 of the wheel holder brackets 210 move above a reference circumference 244 and the rotation axis 520 of the wheels 208 is tangent to such a reference circumference 244.

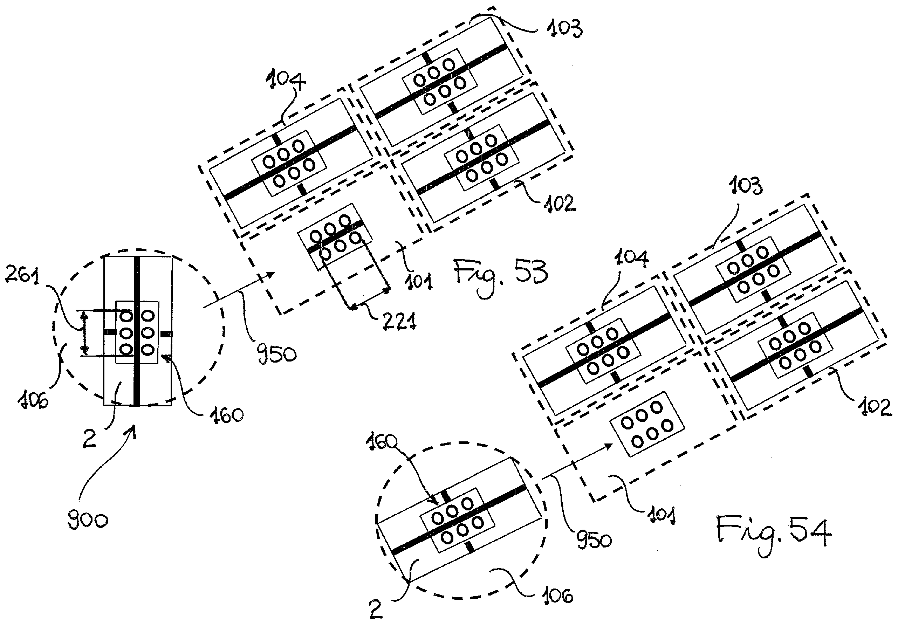

For the purpose of explaining the advantages related to the use of the mentioned locking means and more, in general, to the possible rotation of the platform 2, figures 53 and 54 show, by way of example only, a diagrammatic view of an automatic car park comprising a loading position 106 and a storage section defined by four storage positions 101, 102, 103 and 104. A towing unit 160 according to the present invention is installed at the loading position 106. Such a unit 160 is provided with orientation means of the moveable supporting frame 82 capable of rotating said frame by any angle. A car is located on a platform 2 according to a loading direction indicated by reference numeral 900. It is worth noting that the arrangement of the possible storage positions 101, 102, 103 and 104 appears non-conforming to the loading direction 900.

An orientation of the direction is thus necessary in an approach direction (indicated by reference numeral 950) to the storage section defined above or, in other words, an alignment of the meshing stretch (indicated by reference numeral 261) of the towing unit 160 to the loading position 106 with the meshing stretch 221 of the first towing unit 30 installed at the first position 101. With reference to figure 54, the required condition is reached by virtue of the action of the orientation means described above (any rotation angle), and for the concurrent presence and action of the locking means of the central portion 27 installed on the platform and the concurrent presence and action of the moving wheel transmission mechanism described above to comment figures from 50 to 52.

It is worth noting that the expression "locking means" indicates any technical solution capable of locking the rotation of the central portion 27 of the guiding bar causing the rotation of the platform 2. With reference again to the example shown in figures 51 and 52, once the condition in figure 51 is reached, the orientation means are activated which make the central portion 27 rotate. The latter may compress a close-wound spring 333 integral with the platform 2. By comprising such a close-wound spring 333, the transmission mechanism orients the axes of the wheels 208 of the platform 2, as shown in figure 52. Having reached the mechanical stop between the central portion 27 and the close-wound spring 333, the continuous action of the orientation means determine the rotation of the platform 2. Therefore, in this example, the close-wound spring 333 constitutes locking means for the rotation in the sense of the present invention. The possibility of using other embodiments of locking means is within the scope protection of the present invention.

The present invention thus also relates to an automatic car park comprising a loading position and a plurality of storage positions in which said car park comprises at least one moving assembly according to the present invention.

## Claims

1. A moving assembly (1) for moving a vehicle between at least one first storage or loading/unloading station (101) of said vehicle and at least one second storage or loading/unloading station (102) along at least one first direction of movement (201), said assembly (1) comprising:
- at least one supporting platform (2) of said vehicle, said platform (2) comprising a body (2), which defines an upper resting surface (21) for said vehicle, and a lower surface (22), opposite to said surface, said platform (2) comprising at least one guiding bar (25), which develops along a first development direction (301), said platform (2) comprising a plurality of moving wheels (128', 208);
- a first towing unit (30) and a second towing unit (40), which are configured to interact with said bar (25) determining the dragging of said platform (2) along said at least one first direction of movement (201), said first unit (30) and said second unit (40) being installed in a first position characteristic of said first station (101) and of said second station (102),
said first unit (30) and said second unit (40) each defining an meshing stretch (221, 222) for said bar (25) of said platform (2), at which the first (31') and the second meshing and towing wheels (32') act on said bar (25) from opposite sides (125', 125"), said meshing stretches (221, 222) being aligned so as to define said first direction of movement (201),
wherein said bar (25) has an extension, measured along said first development direction (301), greater than the minimum distance (250), measured along said first direction of movement (201), between said meshing stretches (221, 222), **characterised in that**:
each unit (30,40) comprises at least one first row (31) of first meshing and towing wheels (31') and a second row (32) of second meshing and towing wheels (32'), opposite to said first row (31) of said first wheels (31') and
wherein at least one of said towing units (30,40) comprises orientation means (75, 170) configured to vary the orientation of said meshing stretch (221, 222).

2. An assembly (1) according to claim 1, wherein at least one of said towing units (30, 40) comprises actuating means (60) of said meshing wheels (31', 32') and a supporting frame (82) which can be installed on a fixed base (81) and configured to support said meshing and towing wheels (31', 32') and said actuating means (60).

3. An assembly (1) according to claim 2, wherein at least one of said meshing wheels (31') is installed on a supporting module (34) installed, in turn, on said frame (82), said supporting module (34) configuring a fixed rotation axis (501) and/or wherein at least one of said meshing wheels (32') is installed on a supporting module (34') installed, in turn, on said moveable frame (82), said supporting module (34') comprising pressure means configured to exert a thrust on said wheel towards said bar (25) of said platform.

4. An assembly (1) according to claims 2 or 3, wherein said actuating means comprise a motor means (61) and a mechanical transmission comprising a power wheel (56), actuated by said motor means (61), a plurality of toothed wheels (39) each operatively connected to a corresponding one of said meshing wheels (31',32') and a transmission means (55) wrapped about said power wheel (56) and said plurality of wheels (39), said transmission means (55) being operatively installable between said moveable frame (82) and said base (81).

5. An assembly (1) according to any one of the claims from 1 to 4, wherein said frame (82) is rotatable with respect to said base (81) and wherein said orientation means (75) are configured to vary the orientation of the supporting frame (82) with respect to said base (81) between a first predetermined angular position and a second predetermined angular position.

6. An assembly (1) according to any one of the claims from 2 to 5, wherein said frame (82) is rotatable with respect to said base (81) and wherein said orientation means (170) are configured to vary the orientation of the moveable frame (82) with respect to said base (81) by any angle.

7. An assembly (1) according to any one of the claims from 1 to 6, wherein said guiding bar (25) comprises a central portion (27) and a pair of fixed longitudinal portions (28), said platform (2) comprising two fixed transversal portions (29) which emerge from said lower surface (22) of said platform (2) developing along a second direction (302) of development which is substantially orthogonal to said first development direction (301), said central portion (27) being rotatable between a first position, in which it is aligned with said longitudinal portions (28), and a second position, in which it is aligned with said transversal portions (29) to configure a further guiding bar with development along said second direction (302).

8. An assembly (1) according to any one of the claims from 1 to 7, wherein said moving wheels (128') of said platform (2) are multidirectional wheels configured to move said platform (2) in different directions.

9. An assembly (1) according to claim 7, wherein said platform (2) comprises a transmission mechanism configured to orient the rotation axis (250) of said wheels (208) in a manner corresponding to said central portion (27).

10. An assembly (1) according to any one of the claims from 7 to 9, wherein said platform (2) comprises locking means of said central portion (27) which prevent the rotation of said central portion (27) between said first position and said second position.

## Patentansprüche

1. Bewegungsbaugruppe (1) zum Bewegen eines Fahrzeugs zwischen zumindest einer ersten Speicher- oder Lade/Entladestation (101) des Fahrzeugs und zumindest einer zweiten Speicher- oder Lade/Entladestation (102) entlang zumindest einer ersten Bewegungsrichtung (201), wobei die Baugruppe (1) umfasst:
- zumindest eine Trägerplattform (2) des Fahrzeugs, wobei die Plattform (2) einen Körper (2) umfasst, der eine obere Auflagefläche (21) für das Fahrzeug und eine untere Fläche (22) gegenüberliegend der Fläche aufweist, wobei die Plattform (2) zumindest eine Führungsstange (25) umfasst, die sich entlang einer ersten Entwicklungsrichtung (301) entwickelt, wobei die Plattform (2) eine Mehrzahl sich bewegender Räder (128', 208) umfasst;
- eine erste Schleppeinheit (30) und eine zweite Schleppeinheit (40), die zur Interaktion mit der Stange (25) konfiguriert sind, wobei das Schleppen der Plattform (2) entlang der zumindest einen ersten Bewegungsrichtung (201) bestimmt wird, wobei die erste Einheit (30) und die zweite Einheit (40) in einer ersten Position installiert sind, die für die erste Station (101) und die zweite Station (102) charakteristisch ist,
wobei die erste Einheit (30) und die zweite Einheit (40) jeweils eine Eingriffserstreckung (221, 222) für die Stange (25) der Plattform (2) definieren, bei der das erste (31') und das zweite Eingriffs- und Schlepprad (32') auf die Stange (25) von gegenüberliegenden Seiten (125', 125") wirken, wobei die Eingriffserstreckungen (221, 222) so ausgerichtet sind, dass die erste Bewegungsrichtung (201) definiert wird,
wobei die Stange (25) eine Verlängerung aufweist, die entlang der ersten Entwicklungsrichtung (301) gemessen und größer als die minimale Distanz (250) ist, die entlang der ersten Bewegungsrichtung (201) zwischen den Eingriffserstreckungen (221, 222) gemessen ist, **dadurch gekennzeichnet, dass**:
jede Einheit (30, 40) zumindest eine erste Reihe (31) erster Eingriffs- und Schleppräder (31') und eine zweite Reihe (32) zweiter Eingriffs- und Schleppräder (32') entgegengesetzt der ersten Reihe (31) der ersten Räder (31') umfasst, und
wobei zumindest eine der Schleppeinheiten (30, 40) ein Orientierungsmittel (75, 170) umfasst, das derart konfiguriert ist, die Orientierung der Eingriffserstreckung (221, 222) zu variieren.

2. Baugruppe (1) nach Anspruch 1, wobei zumindest eine der Schleppeinheiten (30, 40) ein Betätigungsmittel (60) der Eingriffsräder (31', 32') und einen Trägerrahmen (82) umfasst, der an einer fixierten Basis (81) installiert und derart konfiguriert sein kann, die Eingriffs- und Schleppräder (31', 32') und das Betätigungsmittel (60) zu stützen.

3. Baugruppe (1) nach Anspruch 2, wobei zumindest eines der Eingriffsräder (31') an einem Trägermodul (34) installiert ist, das seinerseits an dem Rahmen (82) installiert ist, wobei das Trägermodul (34) eine fixierte Rotationsachse (501) konfiguriert; und/oder wobei zumindest eines der Eingriffsräder (32') an einem Trägermodul (34') installiert ist, das seinerseits an dem bewegbaren Rahmen (82) installiert ist, wobei das Trägermodul (34') ein Druckmittel umfasst, das derart konfiguriert ist, einen Schub auf das Rad zu der Stange (25) der Plattform hin auszuüben.

4. Baugruppe (1) nach einem der Ansprüche 2 oder 3, wobei das Betätigungsmittel ein Motormittel (61) und ein mechanisches Getriebe umfasst, das ein Leistungsrad (56), das von dem Motormittel (61) betätigt ist, eine Mehrzahl von Zahnrädern (39), die jeweils funktional mit einem entsprechenden der Eingriffsräder (31', 32') verbunden sind, und ein Übertragungsmittel (55) umfasst, das um das Leistungsrad (56) und die Mehrzahl von Rädern (39) geschlungen ist, wobei das Übertragungsmittel (55) funktional zwischen dem bewegbaren Rahmen (82) und der Basis (81) installierbar ist.

5. Baugruppe (1) nach einem der Ansprüche 1 bis 4, wobei der Rahmen (82) in Bezug auf die Basis (81) drehbar ist und wobei das Orientierungsmittel (75) so konfiguriert ist, die Orientierung des Trägerrahmens (82) in Bezug auf die Basis (81) zwischen einer ersten vorbestimmten Winkelposition und einer zweiten vorbestimmten Winkelposition zu variieren.

6. Baugruppe (1) nach einem der Ansprüche 2 bis 5, wobei der Rahmen (82) in Bezug auf die Basis (81) drehbar ist und wobei das Orientierungsmittel (170) derart konfiguriert ist, die Orientierung des bewegbaren Rahmens (82) in Bezug auf die Basis (81) um einen beliebigen Winkel zu variieren.

7. Baugruppe (1) nach einem der Ansprüche 1 bis 6, wobei die Führungsstange (25) einen Zentralabschnitt (27) und ein Paar fixierter Längsabschnitte (28) umfasst, wobei die Plattform (2) zwei fixierte Querabschnitte (29) umfasst, die von der unteren Fläche (22) der Plattform (2) hervortreten und sich entlang einer zweiten Richtung (302) der Entwicklung entwickeln, die im Wesentlichen orthogonal zu der ersten Entwicklungsrichtung (301) steht, wobei der Zentralabschnitt (27) zwischen einer ersten Position, in der er mit den Längsabschnitten (28) ausgerichtet ist, und einer zweiten Position drehbar ist, in der er mit den Querabschnitten (29) ausgerichtet ist, um eine weitere Führungsstange mit Entwicklung entlang der zweiten Richtung (302) zu konfigurieren.

8. Baugruppe (1) nach einem der Ansprüche 1 bis 7, wobei die sich bewegenden Räder (128') der Plattform (2) multidirektionale Räder sind, die derart konfiguriert sind, die Plattform (2) in verschiedenen Richtungen zu bewegen.

9. Baugruppe (1) nach Anspruch 7, wobei die Plattform (2) einen Getriebemechanismus umfasst, der derart konfiguriert ist, die Rotationsachse (250) der Räder (208) auf eine Weise zu orientieren, die dem Zentralabschnitt (27) entspricht.

10. Baugruppe (1) nach einem der Ansprüche 7 bis 9, wobei die Plattform (2) ein Verriegelungsmittel des Zentralabschnitts (27) umfasst, das die Rotation des Zentralabschnitts (27) zwischen der ersten Position und der zweiten Position verhindert.

## Revendications

1. Ensemble de déplacement (1) destiné à déplacer un véhicule entre au moins un premier poste de stockage ou de chargement/déchargement (101) dudit véhicule et au moins un second poste de stockage ou de chargement/déchargement (102) le long d'au moins une première direction de déplacement (201), ledit ensemble (1) comprenant :
- au moins une plateforme de support (2) dudit véhicule, ladite plateforme (2) comprenant un corps (2), qui définit une surface d'appui supérieure (21) pour ledit véhicule, et une surface inférieure (22), opposée à ladite surface, ladite plateforme (2) comprenant au moins une barre de guidage (25), qui se développe le long d'une première direction de développement (301), ladite plateforme (2) comprenant une pluralité de roues de déplacement (128', 208) ;
- une première unité de remorquage (30) et une seconde unité de remorquage (40), qui sont configurées pour interagir avec ladite barre (25) déterminant le tirage de ladite plateforme (2) le long de ladite au moins une première direction de déplacement (201), ladite première unité (30) et ladite seconde unité (40) étant installées dans une première position caractéristique dudit premier poste (101) et dudit second poste (102),
ladite première unité (30) et ladite seconde unité (40) définissant chacune un allongement d'engrènement (221, 222) pour ladite barre (25) de ladite plateforme (2), au niveau duquel les première (31') et seconde (32') roues d'engrènement et de remorquage agissent sur ladite barre (25) depuis des côtés opposés (125', 125''), lesdits allongements d'engrènement (221, 222) étant alignés de manière à définir ladite première direction de déplacement (201),
dans lequel ladite barre (25) comporte un prolongement, mesuré le long de ladite première direction de développement (301), plus grand que la distance minimale (250), mesurée le long de ladite première direction de déplacement (201), entre lesdits allongements d'engrènement (221, 222), **caractérisé en ce que** :
chaque unité (30, 40) comprend au moins une première rangée (31) de premières roues d'engrènement et de remorquage (31') et une seconde rangée (32) de secondes roues d'engrènement et de remorquage (32'), opposée à ladite première rangée (31) desdites premières roues (31') et
dans lequel au moins l'une desdites unités de remorquage (30, 40) comprend des moyens d'orientation (75, 170) configurés pour faire varier l'orientation dudit allongement d'engrènement (221, 222) .

2. Ensemble (1) selon la revendication 1, dans lequel au moins l'une desdites unités de remorquage (30, 40) comprend des moyens d'actionnement (60) desdites roues d'engrènement (31', 32') et un cadre de support (82) qui peut être installé sur une base fixe (81) et configuré pour supporter lesdites roues d'engrènement et de remorquage (31', 32') et lesdits moyens d'actionnement (60).

3. Ensemble (1) selon la revendication 2, dans lequel au moins l'une desdites roues d'engrènement (31') est installée sur un module de support (34) installé lui-même sur ledit cadre (82), ledit module de support (34) configurant un axe de rotation fixe (501) et/ou dans lequel au moins l'une desdites roues d'engrènement (32') est installée sur un module de support (34') installé lui-même sur ledit cadre mobile (82), ledit module de support (34') comprenant des moyens de pression configurés pour exercer une poussée sur ladite roue vers ladite barre (25) de ladite plateforme.

4. Ensemble (1) selon les revendications 2 ou 3, dans lequel lesdits moyens d'actionnement comprennent un moyen de moteur (61) et une transmission mécanique comprenant une roue motrice (56), actionnée par ledit moyen de moteur (61), une pluralité de roues dentées (39) chacune raccordée opérationnellement à l'une correspondante desdites roues d'engrènement (31', 32') et un moyen de transmission (55) enveloppé autour de ladite roue motrice (56) et ladite pluralité de roues (39), ledit moyen de transmission (55) pouvant être installé opérationnellement entre ledit cadre mobile (82) et ladite base (81).

5. Ensemble (1) selon l'une quelconque des revendications 1 à 4, dans lequel ledit cadre (82) peut tourner par rapport à ladite base (81) et dans lequel lesdits moyens d'orientation (75) sont configurés pour faire varier l'orientation du cadre de support (82) par rapport à ladite base (81) entre une première position angulaire prédéterminée et une seconde position angulaire prédéterminée.

6. Ensemble (1) selon l'une quelconque des revendications 2 à 5, dans lequel ledit cadre (82) peut tourner par rapport à ladite base (81) et dans lequel lesdits moyens d'orientation (170) sont configurés pour faire varier l'orientation du cadre mobile (82) par rapport à ladite base (81) selon tout angle.

7. Ensemble (1) selon l'une quelconque des revendications 1 à 6, dans lequel ladite barre de guidage (25) comprend une portion centrale (27) et une paire de portions longitudinales fixes (28), ladite plateforme (2) comprenant deux portions transversales fixes (29) qui émergent de ladite surface inférieure (22) de ladite plateforme (2) se développant le long d'une seconde direction (302) de développement qui est sensiblement orthogonale à ladite première direction de développement (301), ladite portion centrale (27) pouvant tourner entre une première position, dans laquelle elle est alignée avec lesdites portions longitudinales (28), et une seconde position, dans laquelle elle est alignée avec lesdites portions transversales (29) pour configurer une barre de guidage supplémentaire avec développement le long de ladite seconde direction (302).

8. Ensemble (1) selon l'une quelconque des revendications 1 à 7, dans lequel lesdites roues de déplacement (128') de ladite plateforme (2) sont des roues multidirectionnelles configurées pour déplacer ladite plateforme (2) dans des directions différentes.

9. Ensemble (1) selon la revendication 7, dans lequel ladite plateforme (2) comprend un mécanisme de transmission configuré pour orienter l'axe de rotation (250) desdites roues (208) d'une manière correspondant à ladite portion centrale (27).

10. Ensemble (1) selon l'une quelconque des revendications 7 à 9, dans lequel ladite plateforme (2) comprend des moyens de verrouillage de ladite portion centrale (27) qui empêchent la rotation de ladite portion centrale (27) entre ladite première position et ladite seconde position.
